Europäisches Patentamt

European Patent Office

Office européen des brevets

(11) Publication number: **0 213 747**
**B1**

(12) **EUROPEAN PATENT SPECIFICATION**

(45) Date of publication of the patent specification:
**19.09.90**

(21) Application number: **86305872.3**

(22) Date of filing: **30.07.86**

(51) Int. Cl.⁵: **B60S 1/38**

(54) Improved wiper blade.

(30) Priority: **29.08.85 FR 8512883**

(43) Date of publication of application:
**11.03.87 Bulletin 87/11**

(45) Publication of the grant of the patent:
**19.09.90 Bulletin 90/38**

(84) Designated Contracting States:
**BE DE GB IT**

(56) References cited:
**FR-A- 2 502 086**
**US-A- 3 541 629**
**US-A- 4 005 503**

(73) Proprietor: **CHAMPION SPARK PLUG EUROPE S.A.,**
**Avenue Leopold III 2a, B-7120 Binche(BE)**

(72) Inventor: **Beneteau, Christian, Rue du 131e Regiment**
**d'Infantrie, 61, F-54730 Gorcy(FR)**
Inventor: **Guerard, Norbert, Rue du Canada 14,**
**B-6760 Virton(BE)**

(74) Representative: **Abbie, Andrew Kenneth et al, A.A.**
**THORNTON & CO. Northumberland House 303/306 High**
**Holborn, London, WC1V 7LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a wiper blade provided with a pressure distributing rod having a longitudinal groove wherein a wiping element is located, said pressure distributing rod being linked to the superstructure of the wiper blade by a plurality of claws which are an integral part of the superstructure.

Relevant prior art is known in, for example, US-3541629 and US-4005503. The former document describes a wiper blade in which the wiping element is mounted on a planar backing strip which may have a slot along its length and which is then held in the claws. The latter describes a wiper blade in which the wiping element is located in a groove in a backing member, which is then held in the claws. The backing member is prevented from sliding within the claws by means of complex system of grooves flanges and deformations.

It would be advantageous to provide a simple means for preventing the pressure distributing rod from moving within the claws and holding the wiping element securely in the pressure distribution rod. This would be advantageous for the manufacturing procedures.

To this effect, the present invention provides a wiper blade provided with a one-piece pressure distributing rod having a longitudinal groove wherein a wiping element is located, said pressure distributing rod being linked to the superstructure of the wiper blade by a plurality of claws which are an integral part of the superstructure (see e.g. US-A-3 541 629) characterized that the pressure distributing rod comprises on each side of said groove a longitudinally extending lip directed in use towards the surface to be wiped and that it is retained on the superstructure of the wiper blade by deformations provided on said lips on both sides of at least one of the claws of the superstructure of the wiper blades.

In some embodiments the present invention further provides that the wiping element of the wiper blade is retained in the pressure distributing rod by deformations of the longitudinal lips provided at each of the two extremities of the pressure distributing rod.

The characteristics of the invention will be better understood when reading the following description of two embodiments of the invention in conjunction with the appended drawings, wherein:

Fig. 1 is a partial and schematic elevational view of a wiper blade according to the invention,

Fig. 2 is a section, along line II-II of Fig. 1 and at a larger scale, of the assembly pressure distributing rod/wiping element, when the wiper blade is in its rest position,

Fig. 3 is an elevational view, along arrow III of Fig. 1 and at a larger scale, of the assembly pressure distributing rod/wiping element, when the wiper blade is working,

Fig. 4 is a section at a larger scale, along line IV-IV of Fig. 1 and according to the first embodiment of the invention,

Fig. 5 is a section, at a larger scale, along line IV-IV of Fig. 1 and according to the second embodiment of the invention,

Fig. 6 is a perspective section, along the line VI-VI of Fig. 4 or of Fig. 5, of the pressure distributing rod according to the invention.

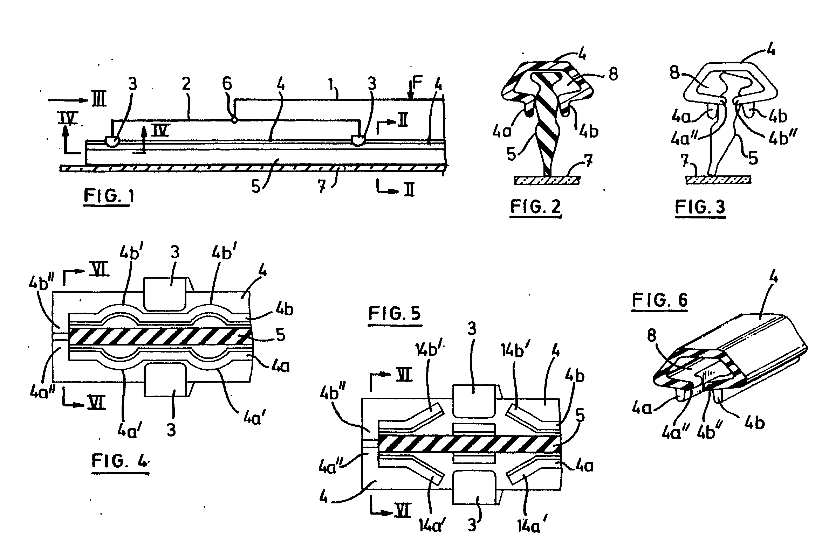

The portion of the wiper blade represented schematically on Fig. 1 comprises the following elements: a main bridge 1 which is linked to the secondary yoke 2 via the articulation 6, claws 3 which are an integral part of the secondary yoke 2 and which surround the upper portion of the pressure distributing rod 4 and the wiping element 5 which extends in the longitudinal groove 8 (Figs. 2, 3, 6) of the pressure distributing rod.

It is to be noted that the elements (1, 6, 2, 3) form the superstructure of the wiper blade of Fig. 1, that said superstructure is only shown as an example, that the wiper blade is symmetrical with respect to the transverse plane passing through the arrow "F" and that the wiper arm (not represented) of the wiper blade is attached at "F" to the main bridge 1 of the superstructure.

On Fig. 2 and 3, which show the assembly pressure distributing rod/wiping element, it can be seen that the upper portion of the pressure distributing rod 4 is provided with a longitudinal groove 8 wherein is located the upper portion of the wiping element 5, and that the lower portion of the pressure distributing rod 4 comprises two longitudinal lips 4a, 4b directed towards the surface to be wiped 7 and between which extends the wiping element 5.

In the first embodiment of the invention, represented on Fig. 4, the pressure distributing rod 4 is retained on the claws 3 of the superstructure 1, 2 of the wiper blade by the deformations 4a', 4b' of said longitudinal lips 4a, 4b. The deformations 4a', 4b' have a substantially semi-circular form and there are four such deformations, i.e. one deformation of each of the two longitudinal lips 4a, 4b on both sides of the two legs of the claw 3. It is to be noted that the four deformations 4a', 4b' may be formed in one single operation, by means of an appropriate tool, before the insertion of the wiping element 5 into the pressure distributing rod 4.

In the second embodiment of the invention, represented on Fig. 5, the pressure distributing rod 4 is retained on the claws 3 of the superstructure 1, 2 of the wiper blade by the deformations 14a', 14b' of said longitudinal lips 4a, 4b. The deformations 14a', 14b' have substantially the form of short tongues directed towards the claw 3 and there are also four such deformations, i.e. one deformation of each longitudinal lip 4a, 4b on both sides of the two legs of the claw 3. In this case it is quite evident that the lips 4a, 4b must be cut before the tongues 14a' 14b' can be directed respectively towards each of the two legs of the claw 3.

Fig. 3 through 6 show how the wiping element 5 (not represented on Fig. 6) of the wiping element is retained in the pressure distributing rod 4 by deformations 4a", 4b" of said longitudinal lips 4a, 4b provided at each of the two extremities of the pressure distributing rod 4. The deformations 4a", 4b" have substantially the form of short tongues directed towards the longitudinal axial plane of the pressure distributing rod 4.

It is further to be noted that the pressure distributing rod according to both embodiments of the invention is preferably made of an appropriate plastic material.

## Claims

1. A wiper blade provided with a one-piece pressure distributing rod (4) having a longitudinal groove (8) wherein a wiping element (5) is located, said pressure distributing rod (4) being linked to the superstructure (1, 2) of the wiper blade by a plurality of claws (3) which are an integral part of the superstructure (1, 2) characterized in that the pressure distributing rod (4) comprises on each side of said groove (8) a longitudinally extending lip (4a, 4b) directed in use towards the surface to be wiped and that it (4) is retained on the superstructure (1, 2) of the wiper blade by deformations (4a', 4b', 14a', 14b') provided on said lips (4a, 4b) on both sides of at least one of the claws (3) of the superstructure (1, 2) of the wiper blades.

2. A wiper blade according to claim 1, characterised in that said deformations of the longitudinal lips (4a, 4b) have a substantially semicircular form (4a', 4b').

3. A wiper blade according to claim 1, characterised in that said deformations of the longitudinal lips (4a, 4b) have substantially the form of short tongues (14a', 14b') directed towards at least one of the claws (3) of the superstructure (1, 2) of the wiper blade.

4. A wiper blade according to claim 1, characterised in that the wiping element (5) of the wiper blade is retained in the pressure distributing rod (4) by deformations (4a", 4b") of said longitudinal lips (4a, 4b) provided at each of the two extremities of the pressure distributing rod (4).

5. A wiper blade according to claim 4, characterised in that said deformations of the longitudinal lips (4a, 4b) have substantially the form of short tongues (4a", 4b") directed towards the longitudinal axial plane of the pressure distributing rod (4).

6. A wiper blade according to claims 1 through 5, characterised in that the pressure distributing rod (4) is made of an appropriate plastic material.

## Patentansprüche

1. Wischblatt versehen mit einer einteiligen, druckverteilenden Stange (4) mit einer longitudinalen Nut (8), in der ein Wischerelement (5) angeordnet ist, wobei die druckverteilende Stange (4) mit einer Überstruktur (1, 2) des Wischblatts durch eine Vielzahl von Krallen (3) verbunden ist, die ein integraler Teil der Überstruktur (1, 2) sind, dadurch gekennzeichnet, daß die druckverteilende Stange (4) auf jeder Seite der Nut (8) eine sich longitudinal erstreckende Lippe (4a, 4b) aufweist, die im Gebrauch zur zu wischenden Fläche hin gerichtet ist, und, daß sie (4) an der Überstruktur (1, 2) des Wischblatts durch Verformungen (4a', 4b', 14a', 14b') gehalten ist, mit denen die Lippen (4a, 4b) auf beiden Seiten zumindest einer der Krallen (3) der Überstruktur (1, 2) des Wischblatts versehen sind.

2. Wischblatt nach Anspruch 1, dadurch gekennzeichnet, daß die Verformungen der longitudinalen Lippen (4a, 4b) im wesentlichen halbkreisförmig (4a', 4b') sind.

3. Wischblatt nach Anspruch 1, dadurch gekennzeichnet, daß die Verformungen der longitudinalen Lippen (4a, 4b) im wesentlichen die Form kurzer, auf zumindest eine der Krallen (3) der Überstruktur (1, 2) des Wischblatts hin gerichteter Zungen (14a', 14b') aufweisen.

4. Wischblatt nach Anspruch 1, dadurch gekennzeichnet, daß das Wischerelement (5) des Wischblatts in der druckverteilenden Stange (4) durch Verformungen (4a", 4b") der longitudinalen Lippen (4a, 4b) gehalten ist, die an jedem der beiden Enden der druckverteilenden Stange (4) vorgesehen sind.

5. Wischblatt nach Anspruch 4, dadurch gekennzeichnet, daß die Verformungen der longitudinalen Lippen (4a, 4b) im wesentlichen die Form kurzer, zur longitudinalen axialen Ebene der druckverteilenden Stange (4) hin gerichteter Zungen (4a", 4b") aufweisen.

6. Wischblatt nach den Ansprüchen 1 bis 5, dadurch gekennzeichnet, daß die druckverteilende Stange (4) aus einem geeigneten Kunststoff-Material gefertigt ist.

## Revendications

1. Balai d'essuie-glace équipé d'une barre de distribution ou de répartition de pression (4) possédant une gorge ou rainure longitudinale (8) dans laquelle un élément (5) est logé, ladite barre de distribution ou répartition de pression (4) étant liée à la superstructure (1, 2) du balai d'essuie-glace par une multiplicité de griffes (3) qui sont venues de matière avec ou font partie intégrante de la superstructure (1, 2), caractérisé en ce que la barre de distribution ou répartition de pression (4) comprend, de chaque côté de ladite gorge ou rainure (8) une lèvre s'étendant longitudinalement (4a, 4b), dirigée, en cours d'utilisation, vers la surface à balayer ou essuyer et en ce qu'elle (4) est retenue sur la superstructure (1, 2) du balai d'essuie-glace par des déformations (4a', 4b', 14a', 14b'), prévues sur lesdites lèvres (4a, 4b) des deux côtés d'au moins l'une des griffes (3) de la superstructure (1, 2) du balai d'essuie-glace.

2. Balai d'essuie-glace suivant la revendication 1, caractérisé en ce que les déformations précitées des lèvres longitudinales (4a, 4b) possèdent une forme sensiblement semicirculaire (4a', 4b').

3. Balai d'essuie-glace suivant la revendication 1, caractérisé en ce que les déformations précitées des lèvres longitudinales (4a, 4b), possèdent sensiblement la forme de courtes languettes (14a', 14b') dirigées vers au moins l'une des griffes (3) de la superstructure (1, 2) du balai d'essuie-glace.

4. Balai d'essuie-glace suivant la revendication 1, caractérisé en ce que l'élément de balayage ou d'essuyage (5) du balai d'essuie-glace est retenu dans la barre de distribution ou répartition de pression (4) par des déformations (4a", 4b") desdites lèvres longitudinales (4a, 4b), prévues à chacune des deux extrémités de la barre de distribution ou répartition de pression (4).

5. Balai d'essuie-glace suivant la revendication 4, caractérisé en ce que les déformations précitées des lèvres longitudinales (4a, 4b) possèdent sensiblement la forme de courtes languettes (4a", 4b") dirigées vers le plan axial longitudinal de la barre de distribution ou répartition de pression (4).

6. Balai d'essuie-glace suivant les revendications 1 à 5, caractérisé en ce que la barre de distribution ou répartition de pression (4) est réalisée en une matière plastique appropriée.

EP 0 213 747 B1

FIG. 1

FIG. 2

FIG. 3

FIG. 4

FIG. 5

FIG. 6